# EUROPEAN PATENT APPLICATION

(11) **EP 3 979 168 A1**
(43) Date of publication of application: **06.04.2022**
(21) Application number: 21180308.5
(22) Date of filing: 18.06.2021
(51) Int. Cl.: G06Q 10/08

(54) **CROWD SOURCED RESOURCE AVAILABILITY PREDICTIONS AND MANAGEMENT**

(30) Priority: 30.09.2020 US 202017037846
(71) Applicant: NCR Corporation, Atlanta, GA 30308-1007 (US)
(72) Inventor: DELL, Christopher M, Waterloo, N2V 2P5 (CA)
(74) Representative: Secerna LLP

(57) **Abstract**

Events associated with touchpoint devices of a plurality of systems are collected in real time by channel agents over a plurality of communication channels. The events are aggregated and normalized across the channels, touchpoint devices, and systems and processed for correlations to expected outcomes based on known previous outcomes. The expected outcomes are communicated in real time to the systems for remediation actions, preventive actions, and planning actions.

## Description

Enterprises from a variety of industries provide a variety of devices from which consumers can conduct business with the enterprises. For example, servers provide consumers access to retail services over a network connection; Automated Teller Machines (ATMs) provide self-service financial transactions; Self-Service Terminals (SST) provide self-checkouts, Point-of-Sale (POS) terminals provide cashier-assisted checkouts; POS terminals and ordering systems within restaurants; and travel kiosks provide self-serve travel services.

Typically, third-party vendors provide and manage software services to or for the enterprises' devices for such things as media levels (paper, ink, toner, currency, *etc*.) of a given device, maintenance for the device or maintenance for peripherals of a device, security, transaction audit logs, Customer Relationship Management (CRM), *etc.*

Furthermore, enterprise devices are connected to different backend systems utilizing different communications and different communication networks. As a result, a single enterprise can have devices that are managed over a variety of different communication channels and a variety of different systems.

Each enterprise collects a variety of transaction data, media usage data, and device operational data for their devices and/or from their software services managed by the third-party vendors. This data may provide a state of a enterprise's devices at any given point in time. However, the data is not correlated across channels, across devices, across devices on a per-channel basis, or across different devices of different enterprises for a given channel or across channels. Moreover, the data collected often does not identify any information regarding availability of specific channel connections needed by the enterprise's devices. Further, the data collection will not identify potential anomalies that may be more indicative of a localized trend or event (*e.g.,* a surge in retail transactions, restaurant visits, and ATM withdrawals may actually be correlated to some regional event that occurred); a loss of connectivity across these same devices may be indicative of a power failure or widespread communication error; *etc.*)*.*

Thus, enterprises are substantially unable to derive an adequate state of their devices, channels, and correspondingly their business operations in a timely fashion that would allow the enterprises to take proactive and/or remedial actions to avoid loss of business operations.

In various embodiments, methods and a system for crowd sourced resource availability predictions and management are presented.

According to a first aspect of the present invention there is provided a method, comprising providing an Omni channel management platform; receiving, on the Omni channel management platform, events and data collected by channel agents of channels from touchpoint devices and systems of the touchpoint devices; correlating, on the Omni channel management platform, the events and data; and providing, from the Omni channel management platform, a predicted outcome to one or more of the systems that are associated with one or more enterprises based on the correlating.

Aptly, receiving further includes assigning channel identifiers for channels to the events and data received from channel agents.

Aptly, receiving further includes identifying the events and data as information collected from the touchpoint devices and the systems for transaction metrics and operational data.

Aptly, identifying further includes identifying the events and data as additional information provided by the channel agents for touchpoint location data, channel specific data, and network connection data.

Aptly, correlating further includes normalizing the events and data into normalized data.

Aptly, normalizing further includes identifying patterns within the normalized data.

Aptly, identifying further includes evaluating rules associated with the patterns and determining the predicted outcome.

Aptly, determining further includes providing the patterns and the predicted outcome to a trained machine-learning algorithm and obtaining as output a modified version of the predicted outcome.

Aptly, normalizing further includes providing the normalized data as input to a trained machine-learning algorithm and receiving as output from the trained machine-learning algorithm the predicted outcome.

Aptly, providing further includes assigning an automated action to the predicted outcome and providing the automated action to at least one of the systems for remediating the predicted outcome.

According to a second aspect of the present invention there is provided a method, comprising collecting, by a plurality of channel-specific agents, events and data from touchpoint devices and systems connected to the touchpoint devices over channel connections; augmenting, by the plurality of channel-specific agents, the events and data with channel specific data and channel connection data; providing, by the plurality of channel-specific agents, augmented events and data to an Omni channel management platform; correlating, by the Omni channel management platform, the augmented events and data to a predicted outcome; and reporting, by the Omni channel management platform, the predicted outcome to at least one of the systems for remediation or planning based on the predicted outcome.

Aptly, correlating further includes normalizing the augmented events and data into normalized data.

Aptly, normalizing further includes providing the normalized data to a trained machine-learning algorithm as input and receiving as output a ranked listing of potential predicted outcomes.

Aptly, receiving further includes selecting the predicted outcome as a highest ranked one of the potential predicated outcomes in the ranked listing.

Aptly, normalizing further includes deriving patterns within the normalized data.

Aptly, deriving further includes obtaining rules based on the patterns.

Aptly, obtaining further includes evaluating the rules and determining coarse-grain potential predicted outcomes.

Aptly, evaluating further includes providing the normalized data, the patterns, and the coarse-grain potential predicated outcomes to a trained machine-learning algorithm as input and receiving as output from the trained machine-learning algorithm the predicted outcome.

According to a third aspect of the present invention there is provided a system, comprising a cloud comprising at least one server; the at least one server comprising at least one processor and at least one non-transitory medium comprising executable instructions; the executable instructions when executed by the at least one processor from the at least one non-transitory computer-readable storage medium causing the at least one processor to perform operations comprising providing an Omni channel management platform; collecting, on the Omni channel management platform, events and data from channel agents for touchpoint devices and systems connected to the touchpoint devices; normalizing, on the Omni channel management platform, the events and data as normalized data; correlating, on the Omni channel management platform, the normalized data to a predicted outcome; and providing, from the Omni channel management platform, the predicted outcome to one or more of the systems for remediation of or planning for the predicted outcome.

Aptly, the touchpoint devices comprise: Point-Of-Sale (POS) terminals, Self-Service Terminals (SSTs), Automated Teller Machines (ATMs), kiosks, tablet computers, laptop computers, servers, desktop computers, phones, peripheral devices integrated into host devices, and wearable processing devices.

According to an aspect, a method for crowd sourced resource availability predictions and management is presented. More particularly, an Omni channel management platform is provided. Events and data collected by channel agents of channels from touchpoint devices and systems of the touchpoint devices are received on the Omni channel management platform. The events and data are correlated on the Omni channel management platform and a predicted outcome based on correlation is provided from the Omni channel management platform to one or more of the systems.

Embodiments of the present invention will now be described hereinafter, by way of example only, with reference to the accompanying drawings in which:
FIG. 1 is a diagram of a system for crowd sourced resource availability predictions and management, according to an example embodiment.
FIG. 2 is a diagram of still a method for crowd sourced resource availability predictions and management, according to an example embodiment.
FIG. 3 is a diagram of another method for crowd sourced resource availability predictions and management, according to an example embodiment.

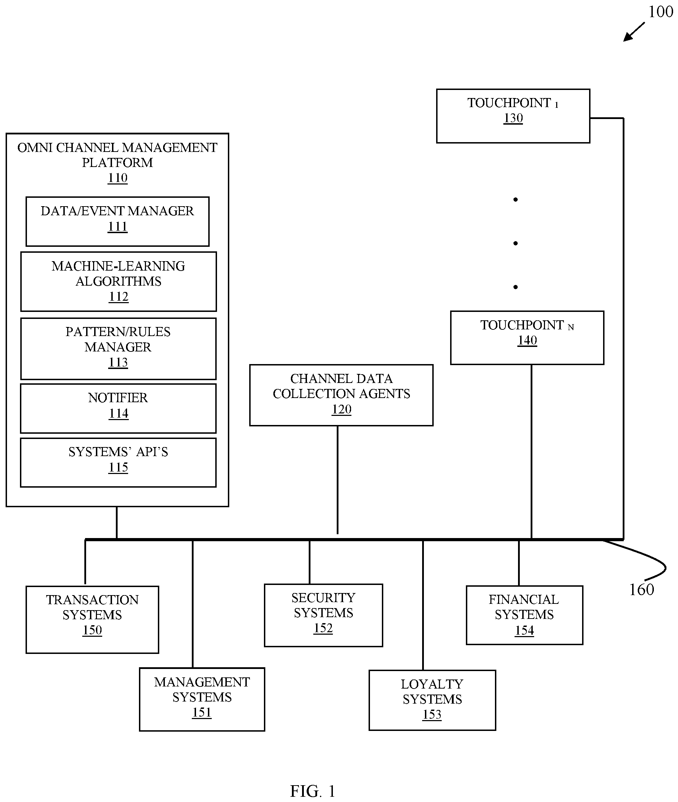

FIG. 1 is a diagram of a system 100 for crowd sourced resource availability predictions and management, according to an example embodiment. It is to be noted that the components are shown schematically in greatly simplified form, with only those components relevant to understanding of the embodiments being illustrated.

Furthermore, the various components (that are identified in the FIG. 1) are illustrated and the arrangement of the components is presented for purposes of illustration only. It is to be noted that other arrangements with more or less components are possible without departing from the teachings of tracking movements of crowd sourced resource availability predictions and management presented herein and below.

The system 100, as will be described more completely herein, provides techniques for collection of channel-specific and touchpoint device-specific data in real time. The collected data is aggregated, evaluated and correlated to a predicted outcome and the predicted outcome is sent as notifications to relevant systems. This allows for detection of channel-specific problems, geographic specific problems, cross-enterprise problems, and other problems and this further allows for proactive intervention actions or remedial actions from a given enterprise or a set of enterprises associated with the touchpoint devices and/or systems. Essentially, events and data are crowd sourced across resources that span multiple channels, geographic regions, enterprises, and systems to proactively predict resource availability and to proactively manage the resources.

As used herein a "resource" may comprise a type of media (paper, ink, currency, etc.), a device, a touchpoint, a peripheral of a given device, a channel network connection for a given device, a power source for a given device, a transaction log for a given device, an electronic journal for a given device, a custom collection of devices, a software service for a given device, and/or a custom combination of these things.

As used herein a "touchpoint device" is any enterprise device for which interaction occurs with employees of that enterprise or with customers of that enterprises. Touchpoint devices may comprise POS terminals, ATMs, SSTs, kiosks, phones, wearable processing devices, tablets, laptops, desktops, televisions, digital displays, a network and voice enabled device (*e.g.,* Amazon Echo, Google Home, *etc.),* servers, clouds (multiple servers cooperating together as cloud processing environments, and others.

As used herein a "transaction" may comprise a purchase transaction or any interaction or communication being performed by an operator (customer, user, volunteer, employee, *etc.)* of a touchpoint device.

As used herein an "enterprise" comprises retailers, banks, any for-profit organization, any governmental agency or branch of government, any religious organization, scientific organization, political organization, and any type of non-profit organization.

The system comprises an Omni Channel (OC) management platform 110, a plurality of channel data agents 120, a plurality of touchpoint devices 130 through 140, transaction systems 150, management systems 151, security systems 152, loyalty systems 153, and financial systems 154 connected over a variety of channel network connections 160.

Platform 110 comprises a data/event manager 111, machine-learning algorithms 112, pattern/rules manager 113, notifier 114 and systems' Application Programming Interfaces (APIs) 114.

Platform 110 may be provided over a single server of a collection of services that logically cooperate as a single server representing a cloud. The server/cloud comprises one or more processors and a non-transitory computer-readable storage medium having executable instructions for 111-115.

Channel data collection agents 120 are executed on servers or clouds as executable instructions by the corresponding processors of those servers or clouds. Each agent 120 is situated on a channel between a corresponding system (150-154) and its connected touchpoint devices 130 through 140, such that each agent can collect data and events for the corresponding channel connections, touchpoint devices 130 through 140, and systems 150-154.

Each touchpoint device 130-140 comprises a processor and a non-transitory computer-readable storage medium comprising executable instructions for software services that execute on the corresponding processors.

In an embodiment, each agent 120 is executed as executable instructions on each touchpoint device 130-140. In this embodiment, each agent 120 is customized based on a type of device associated with its corresponding touchpoint device 130-140.

Systems 150-154 comprise a plurality of servers/clouds each server/cloud further comprising a processor and a non-transitory computer-readable storage medium having executable instructions that when executed by the corresponding processor perform operations relevant to the type of system 150-154.

For example, transaction systems 150 manage and monitor retail transactions occurring via touchpoint devices associated with servers, Self-Service Terminals (SSTs), Point-Of-Sale (POS) terminals, kiosks, laptops, desktops, and/or mobile devices.

Management systems 151 manage assets of enterprises and may include software services executing on any of the touchpoint devices 130-140, such as servers, mobile devices, laptops, desktops, SSTs, POS terminals, kiosks, ATMs, *etc.*

Security systems 152 manage security of enterprises and may include software services execution on any of the touchpoint devices, such as servers, mobile devices, laptops, desktops, SSTs, POS terminals, kiosks, Automated Teller Machines (ATMs), *etc.*

Loyalty systems 153 manage loyalty and Customer Relationship Management (CRM) of enterprises for may include software services executing on any of the touchpoint devices, such as servers, mobile devices, laptops, desktops, SSTs, POS terminals, kiosks, ATMs, *etc.*

Financial systems 154 manage financial transactions and accounts of enterprises and may include software services executing on touchpoint devices, such as teller terminals, ATMs, tablets, laptops, desktops, *etc.*

During operation of touchpoint devices 130-140, software services collect data and events that are reported over their corresponding channel connections to their corresponding systems 150-154. Agents 120 are interposed between the touchpoint devices 130-140 and their corresponding systems 150-154, such that the data and events can be obtained (directly from the sending touchpoint devices 130-140 over channel connections 160).

Agents 120 send the data and events along with metadata to data/event manager 111 of OC management platform 110. The metadata may comprise such things as enterprise/enterprise identifier, touchpoint device identifier, geographic location for the touchpoint device 130-140, time of day, day of week, calendar date, channel agent identifier for the reporting channel agent 120, channel identifier for the corresponding channel, and/or bandwidth available over the corresponding channel.

Data/event manager 111 may normalize the reported data and events received from agents 120 for subsequent processing of the data and events and corresponding metadata across all the disparate data and event formats that may be provided by the software services of the touchpoint devices 130-140.

The correlation of the collected data, events, and metadata may proceed in a few different manners or a combination of manners.

In one technique, the pattern/rules manager 113 mines the collected normalized data (normalized events, data produced from software services of the touchpoint devices 130-140, and metadata provided by agents 120) to derive or detect any repeating patterns. The patterns are then linked to rules that are evaluated and the rules identify known correlations for the normalized data.

In another technique, the normalized data is passed to one or more trained machine-learning algorithms (MLAs) 112 as input. The MLAs 112 are trained to take the inputted normalized data and produce a ranked list of potential outcomes. The MLAs 112 in this scenario provide the correlations based on the ranked list of potential outcomes. MLAs 112 may be continuously retrained on actual outcomes for previously incorrect predicted outcomes by re-providing the corresponding normalized data that produced the incorrect predicted outcome as input to the MLAs 112 and providing the expected outcome as the actual outcome that was observed for the normalized data. In this way, the MLAs 112 are continuously learning and becoming more accurate in producing the predicted outcomes.

In a third technique, manager 113 may detect patterns in the normalized data and provide the patterns to trained MLAs 112 for obtaining the predicted outcome associated with the normalized data.

In a fourth technique, manager 113 may detect the patterns in the normalized data and apply coarse-grain rules on the identified patterns producing coarse-grain predicted outcomes. The patterns and coarse-grain predicted outcomes provided to trained MLAs 112 for obtaining the predicated outcome associated with the normalized data.

Any rules evaluated by manager 113 may be developed based on collected normalized data and observations of what the outcome was. Oftentimes, the outcome is observed with no discernable correlation to any specific data, collection of the normalized data and pattern detection allows for a mechanism by which the rules can be defined over time and evaluated by manager 113.

The outcomes can be a variety of perceived impending resource availability issues, such as power outages in a given geographical region, network connectivity issues between particular touchpoints, network load issues over a given channel, geographically restricted issues across channels, media levels requiring replenishment in specific touchpoint devices 130-140, unusual increase in transactions at a set of touchpoint devices 130-140 or within a geographical region, and others.

Notifier 114 reports the predicted outcomes using the APIs 115 to the corresponding systems 150-154, such that software services or human resources associated with the predicted outcomes can take automated or manual action to avoid the outcome and/or prepare the touchpoint devices 130-140 for the outcomes.

As an example, consider specific events that affect channel availability that can be better explained, and appropriate action taken by utilizing data and events collected by agents 120. Consider a bank or a enterprise experiencing channel availability, where the back in isolation has not way of determining based on its data that the channel is down; however, by crowd sourcing data and events across touchpoint devices 130-140 for multiple enterprises in retail stores, restaurant and banking channels, system 100 can determine the issue and report the lack of channel availability to the bank or enterprise automatically via APIs 115 to the appropriate systems 150-154.

In another case, agents 120 collect connectivity and transaction data and OC management platform 110 determines a predicted outcome and action for various collected events and data that could not be detected by looking at a single event in isolation. Platform 110 determines what is likely the potential anomaly and potential or predicted outcomes.

In yet another situation, OC platform 110 detects through the reported events and data that multiple POS terminals and ATMs (types of touchpoint devices) have lost communications in close proximity to each other. OC platform 110 processes MLAs 112 and/or manager 113 against the events and data to predict an outcome associated with a power outage. Notifier 114 uses APIs 115 to alert management systems 151 that a power outage is likely, so dispatching engineers will not accomplish anything since once the power is restored the terminals should restore normally and regain connectivity. Alternatively, notifier 114 uses APIs 115 to alert management systems 115 that the enterprise may want to dispatch a single engineer in advance of power being restored to reduce the amount of travel time required is some terminals do not restore as expected (a proactive action).

In another case, if across different business segments of enterprises within a given geographical region, OC platform 110 detects an increased frequency of transactions, OC platform 110 may assign a predicted outcome that ATMs may need replenished with cash, enterprises may require increased staffing, *etc.*

System 100 leverages disparate and seemingly disconnected events and data produced by touchpoints 130-140 and systems 150-154 and derives correlations attached to potential outcomes, which can be assigned to specific actions and alerts provided to systems 150-154 for proactively managing touchpoint devices 130-140.

In an embodiment, as events are observed by the enterprises, the actual event (increased sales, connectivity issues, power issues, decreased sales, increased touchpoint activity, decreased touchpoint activity) are assigned an outcome and provided to OC platform 110 where MLAs 112 are trained on the collected normalized data to predict the outcome again based on similarly produced normalized data and/or rules are developed for processing by manager 113 to predict the outcome again based on similarly produced normalized data. In this way, system 100 learns and becomes more accurate in predicting outcomes. Similarly, enterprises can provide their own customized suggested actions to associate with the observed outcome and provide such actions to notifier 114 for automated communication to the appropriate systems 150-154 when that outcome is subsequently predicted by OC platform 110.

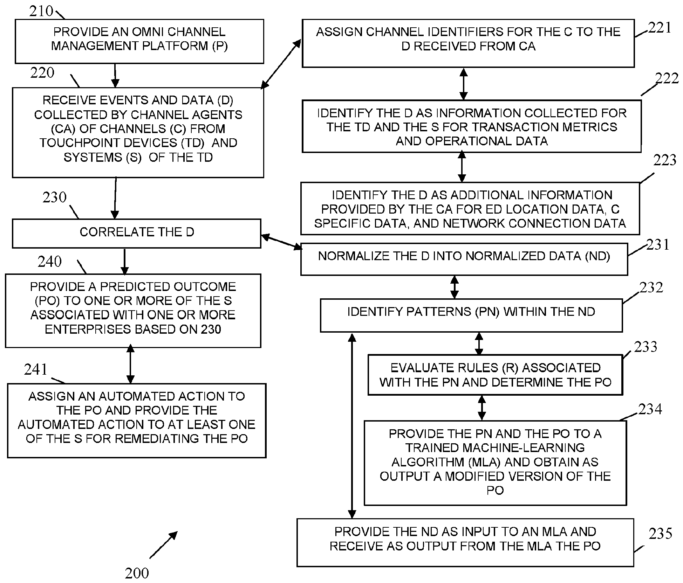

These and other embodiments are now discussed with reference to FIGS. 2-3.

FIG. 2 is a diagram of a method 200 for crowd sourced resource availability predictions and management, according to an example embodiment. The software module(s) that implements the method 200 is referred to as an "outcome prediction manager." The outcome prediction manager is implemented as executable instructions programmed and residing within memory and/or a non-transitory computer-readable (processor-readable) storage medium and executed by one or more processors of a device. The processor(s) of the device that executes the outcome prediction manager are specifically configured and programmed to process the outcome prediction manager. The outcome prediction manager has access to one or more network connections during its processing. The network connections can be wired, wireless, or a combination of wired and wireless.

In an embodiment, the device that executes outcome prediction manager is a server or cloud.

In an embodiment, the outcome prediction manager processes with OC management platform 110.

In an embodiment, the outcome prediction manager is all of or some combination of 111-115.

At 210, the outcome prediction manager provides an Omni channel management platform 110.

At 220, the outcome prediction manager receives, on platform 110, events and data collected by channel agents 120 of channels 160 from touchpoint devices 130-140 and systems 150-154.

In an embodiment, at 221, the outcome prediction manager assigns channel identifiers for the channels 160 to the events and data received from the channel agents 120.

In an embodiment of 221 and at 222, the outcome prediction manager identifies the events and data as information collected from the touchpoint devices 130-140 and the systems 150-154 for transaction metrics and operational data.

In an embodiment of 222 and at 223, the outcome prediction manager identifies the events and data as additional information provided by the channel agents 120 for touchpoint device location data, channel specific data, and network connection data.

At 230, the outcome prediction manager correlates, on the platform 110, the events and data.

In an embodiment, at 231, the outcome prediction manager normalizes the events and data as normalized data.

In an embodiment of 231 and at 232, the outcome prediction manager identifies patterns within the normalized data.

In an embodiment of 232 and at 233, the outcome prediction manager evaluates rules associated with the patterns and determines the predicted outcome (noted at 240 below).

In an embodiment of 233 and at 234, the outcome prediction manager provides the patterns and the predicted outcome to a trained MLA 112 and obtains as output a modified version of the predicted outcome.

In an embodiment of 232 and at 235, the outcome prediction manager provides the normalized data as input to an MLA 112 and receives as output from the MLA 112 the predicted outcome.

At 240, the outcome prediction manager provides a predicted outcome to one or more of the systems 150-154 associated with one or more enterprises based on 230.

In an embodiment, at 241, the outcome prediction manager assigns an automated action to the predicted outcome and provides the automated action to at least one of the systems 150-154 for remediating the predicted outcome.

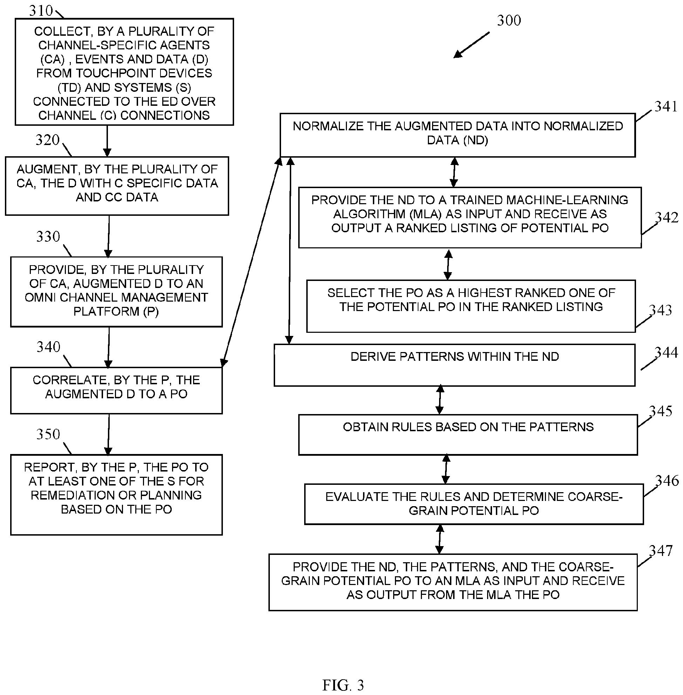

FIG. 3 is a diagram of another method 300 for crowd sourced resource availability predictions and management, according to an example embodiment. The software module(s) that implements the method 300 is referred to as an "event correlator." The event correlator is implemented as executable instructions programmed and residing within memory and/or a non-transitory computer-readable (processor-readable) storage medium and executed by one or more processors of a device. The processors that execute the event correlator are specifically configured and programmed to process the event correlator. The event correlator has access to one or more network connections during its processing. The network connections can be wired, wireless, or a combination of wired and wireless.

In an embodiment, the device that executes the event correlator is a server of a cloud.

In an embodiment, the event correlator processed within and from OC management platform 110.

In an embodiment, the event correlator processes within the platform 110 and on a plurality of clouds and/or servers across a plurality of channels 160.

In an embodiment, the event correlator is all or some combination of 111-115, 120, and/or method 200.

The event correlator presents another and, in some manners, and enhanced processing perspective to that which was presented above with method 200 of FIG. 2.

At 310, the event correlator, via a plurality of channel-specific agents, collects events and data from touchpoint devices 130-140 and systems 150-154 connected over channel connections 160.

At 320, the event correlator, via the channel-specific agents, augments the events and data with channel specific data and channel connection data.

At 330, the event correlator, via the channel-specific agents, provides augmented data to the platform 110.

At 340, the event correlator, on platform 110, correlates the augmented data to a predicted outcome.

In an embodiment, at 341, the event correlator normalizes the augmented data into normalized data.

In an embodiment of 341 and at 342, the event correlator provides the normalized data to a trained MLA 112 as input and receives as output a ranked listing of predicted outcomes.

In an embodiment of 342 and at 343, the event correlator selects the predicted outcome as a highest ranked one of the predicted outcomes in the ranked listing.

In an embodiment or 341 and at 344, the event correlator derives patterns within the normalized data.

In an embodiment of 344 and at 345, the event correlator obtains rules based on the patterns.

In an embodiment of 345 and at 346, the event correlator evaluates the rules and determines coarse-grain potential predicted outcomes.

In an embodiment of 346 and at 347, the event correlator provides the normalized data, the patterns, and the coarse-grain potential predicted outcomes to a trained MLA 112 as input and the event correlator receives as output from the trained MLA 112 the predicted outcome.

At 350, the event correlator, on the platform 110, reports the predicted outcome to at least one of the systems 150-154 for remediation or planning based on the predicted outcome.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

## Claims

1. A method, comprising:
providing an Omni channel management platform;
receiving, on the Omni channel management platform, events and data collected by channel agents of channels from touchpoint devices and systems of the touchpoint devices;
correlating, on the Omni channel management platform, the events and data; and
providing, from the Omni channel management platform, a predicted outcome to one or more of the systems that are associated with one or more enterprises based on the correlating.

2. The method of claim 1, wherein receiving further includes assigning channel identifiers for channels to the events and data received from channel agents.

3. The method of claim 2, wherein receiving further includes identifying the events and data as information collected from the touchpoint devices and the systems for transaction metrics and operational data.

4. The method of claim 3, wherein identifying further includes identifying the events and data as additional information provided by the channel agents for touchpoint location data, channel specific data, and network connection data.

5. The method of claim 1, wherein correlating further includes normalizing the events and data into normalized data.

6. The method of claim 6, wherein normalizing further includes identifying patterns within the normalized data.

7. The method of claim 6, wherein identifying further includes evaluating rules associated with the patterns and determining the predicted outcome.

8. The method of claim 7, wherein determining further includes providing the patterns and the predicted outcome to a trained machine-learning algorithm and obtaining as output a modified version of the predicted outcome.

9. The method of claim 5, wherein normalizing further includes providing the normalized data as input to a trained machine-learning algorithm and receiving as output from the trained machine-learning algorithm the predicted outcome.

10. The method of claim 1, wherein providing further includes assigning an automated action to the predicted outcome and providing the automated action to at least one of the systems for remediating the predicted outcome.

11. A system, comprising:
a cloud comprising at least one server;
the at least one server comprising at least one processor and at least one non-transitory medium comprising executable instructions;
the executable instructions when executed by the at least one processor from the at least one non-transitory computer-readable storage medium causing the at least one processor to perform operations comprising:
providing an Omni channel management platform;
collecting, on the Omni channel management platform, events and data from channel agents for touchpoint devices and systems connected to the touchpoint devices;
normalizing, on the Omni channel management platform, the events and data as normalized data;
correlating, on the Omni channel management platform, the normalized data to a predicted outcome; and
providing, from the Omni channel management platform, the predicted outcome to one or more of the systems for remediation of or planning for the predicted outcome.

12. The system of claim 11, wherein the touchpoint devices comprise:
Point-Of-Sale (POS) terminals, Self-Service Terminals (SSTs), Automated Teller Machines (ATMs), kiosks, tablet computers, laptop computers, servers, desktop computers, phones, peripheral devices integrated into host devices, and wearable processing devices.
